# EUROPÄISCHE PATENTANMELDUNG

(11) **EP 0 889 476 A1**
(43) Veröffentlichungstag der Anmeldung: **07.01.1999**
(21) Anmeldenummer: 98111517.3
(22) Anmeldetag: 23.06.1998
(51) Int. Cl.: G11B 33/04

(54) **Behälter für wenigstens einen Gegenstand**

(30) Priorität: 02.07.1997 DE 19727033
(71) Anmelder: Aloys Hohn Kunststoffverarbeitung, 74388 Talheim (DE)
(72) Erfinder: Hohn, Manuela, 74199 Untergruppenbach (DE)

(57) **Zusammenfassung**

Ein Behälter (10; 10a; 10b; 10c) zur Aufnahme wenigstens eines Gegenstandes (1), insbesondere eines Tonträgers in Form einer CD, besteht im wesentlichen aus einem taschenförmigen Grundkörper (11; 11a; 11b; 11c) zur Aufnahme des wenigstens einen Gegenstandes (1) und einem Hüllkörper (20; 20a; 20b; 20c). Der Grundkörper (11; 11a; 11b; 11c) umgibt den wenigstens einen Gegenstand (1) nur teilweise. Zur Entnahme des wenigstens einen Gegenstandes (1) aus dem Grundkörper (11; 11a; 11b; 11c) ist der Hüllkörper (20; 20a; 20b; 20c) zusammendrückbar, wobei eine Durchtrittsöffnung (35; 35a; 35b; 35c) für den Gegenstand (1) ausgebildet wird.

## Beschreibung

Die Erfindung betrifft einen Behälter für wenigstens einen Gegenstand nach dem Oberbegriff des Anspruchs 1, wie er aus der DE 195 10 090 A1 bekannt ist. Bei dem bekannten Behälter ist der Gegenstand, speziell ein Datenträger in Form einer CD, in einem Stützkörper angeordnet, der sich innerhalb einer beispielsweise aus Papier oder Pappe bestehenden Schutzhülle befindet. Um den Gegenstand entnehmen zu können, muß die Schutzhülle zuerst geöffnet werden, was durch Abziehen eines Haftmittels erfolgt, das einen an der Schutzhülle angelenkten Überstand mit einer Außenfläche der Schutzhülle verbindet. In der geöffneten Position der Schutzhülle ist der Gegenstand nur noch vom Stützkörper geschützt. Weiterhin nimmt die geöffnete Schutzhülle eine relativ große Fläche ein, was insbesondere das Arbeiten an einem Arbeitsplatz wie einem Computerplatz erschwert, wo nur eine relativ geringe Fläche für zusätzliche Arbeitsmittel zur Verfügung steht.

Weiterhin sind sogenannte CD-Hüllen allgemein bekannt. Eine CD-Hülle hat einen Grundkörper, in den die CD einsetzbar und mittels eines elastischen Halteelements, das in die Mittelbohrung der CD eingreift, fixierbar ist. Am Grundkörper ist ein Deckel schwenkbar befestigt, der zusammen mit dem Grundkörper in der Schließstellung des Deckels die CD allseitig umschließt. Bei der CD-Hülle muß zur Entnahme der CD ein Rastmechanismus zwischen Deckel und Grundkörper überwunden werden. Weiterhin ist es erforderlich, durch Deformieren der CD und/oder des Halteelements den Fixiermechanimus in der Mittelbohrung der CD im Grundkörper zu überwinden. Beide Vorgänge erfordern eine gewisse Handfertigkeit und sind für ungeübte Personen nicht einfach beherrschbar.

Aufgabe der Erfindung ist es, einen gattungsgemäßen Behälter für wenigstens einen Gegenstand derart weiterzubilden, daß bei weiterhin ausreichendem Schutz gegenüber mechanischen Beschädigungen des Gegenstandes oder gegenüber Verschmutzungen eine einfachere Entnahme des Gegenstandes aus dem Behälter ermöglicht wird, wobei gleichzeitig bei geöffnetem Behälter ein möglichst geringer Platzbedarf angestrebt wird. Diese Aufgabe wird mit den kennzeichnenden Merkmalen des Anspruchs 1 gelöst. Mit den kennzeichnenden Merkmalen des Anspruchs 1 wird das Öffnen des Behälters nunmehr durch einfaches Zusammendrücken eines Hüllkörpers bewirkt. Das Zusammendrücken bewirkt einen freien Zugriff auf den Gegenstand, der nunmehr lediglich aus dem Grundkörper herausgezogen werden muß. Auch das Einführen des Gegenstandes ist sehr einfach möglich, da auch hier im wesentlichen lediglich ein Einfädeln des Gegenstandes in den Grundkörper erforderlich ist.

In den Unteransprüchen und der Beschreibung sind vorteilhafte Weiterbildungen des Erfindungsgegenstands nach Anspruch 1 angegeben.

Besonders vorteilhaft ist die Verwendung einer zusätzlichen Schutzhülse, die den aus dem Grundkörper herausragenden Teil des Gegenstandes auch bei geschlossenem oder teilweise geöffnetem Behälter überdeckt. Dadurch ist der Gegenstand besonders gut geschützt.

Weiterhin ist es vorteilhaft, Rast- oder Anschlagelemente am Grundkörper vorzusehen, die die Bewegung des Hüllkörpers beschränken oder ein besonders einfaches Wiedereinführen des Gegenstandes in den Behälter ermöglichen.

Ausführungsbeispiele der Erfindung sind in der Zeichnung dargestellt und werden im folgenden näher erläutert. Es zeigen:
Figur 1 einen ersten Behälter in geschlossenem Zustand in einer Seitenansicht,
Figur 2 den Behälter nach Figur 1 in geöffnetem Zustand in einer Seitenansicht,
Figur 3 den geöffneten Behälter nach Figur 2 in einer perspektivischen Ansicht,
Figur 4 einen zweiten Behälter in geöffnetem Zustand in einer Seitenansicht,
Figur 5 einen dritten Behälter in geschlossenem Zustand in einer Seitenansicht, und
Figur 6 einen modifizierten ersten Behälter in teilweise geöffnetem Zustand in einer Seitenansicht.

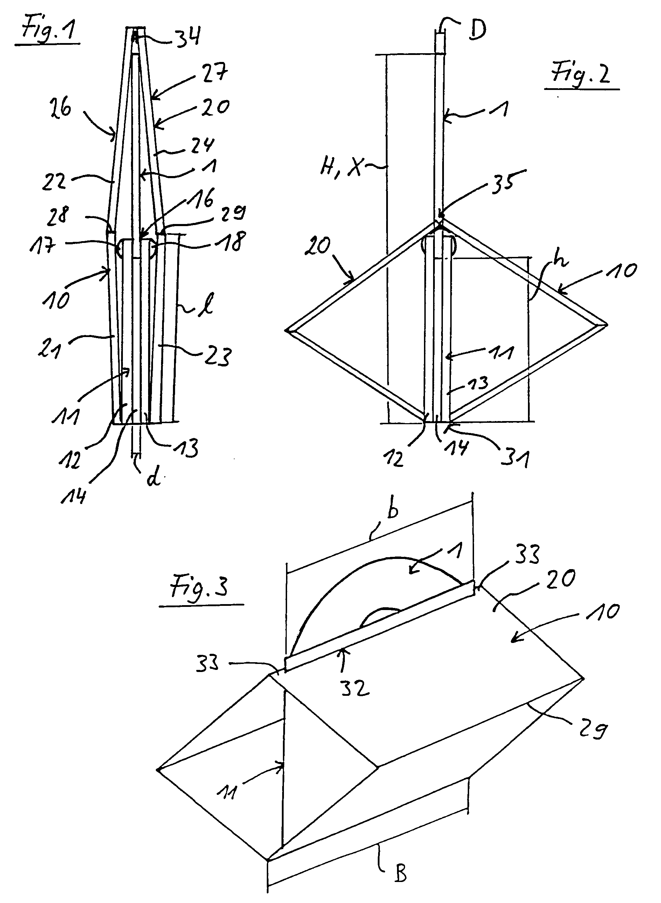

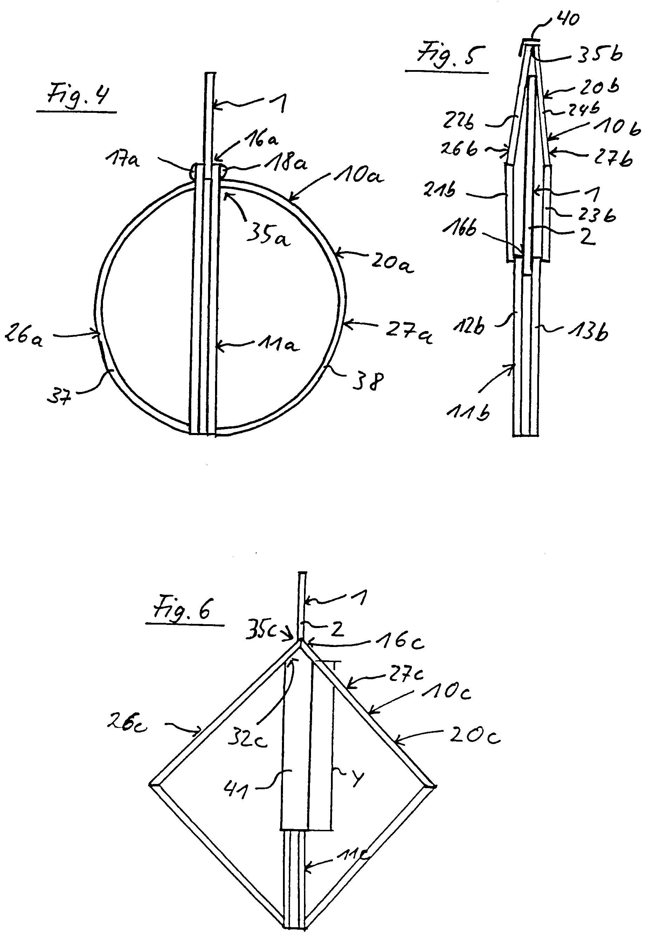

Der in den Figuren 1 bis 3 dargestellte erste Behälter 10 dient zum Aufbewahren wenigstens eines Gegenstandes, insbesondere eines Tonträgers in Form einer sogenannten CD 1. Es können jedoch auch andere Gegenstände vom Behälter 10 aufgenommen werden, beispielsweise Vistitenkarten oder dergleichen. Der Behälter 10 weist einen taschenförmig ausgebildeten Grundkörper 11 auf, der die CD 1 teilweise, im Ausführungsbeispiel in etwa bis zur Hälfte ihrer Höhe H aufnimmt. Der Grundkörper 11 hat zwei Seitenwände 12, 13, und einen entsprechend der Kreisform der CD 1 ausgesparten Mittelabschnitt 14, dessen Dicke d der Dicke D der CD 1 entspricht. Wenn, wie dargestellt, die Breite b des Grundkörpers 11 dem Durchmesser X der CD 1 entspricht, ist die Höhe h des Mittelabschnitts 14 etwas geringer als die Höhe der beiden Seitenwände 12, 13.

Auf den der CD 1 abgewandten Seiten der Seitenwände 12, 13 ist etwas unterhalb der Öffnung 16 des Grundkörpers 11 jeweils wenigstens ein Anschlagelement 17, 18 auf jeder Seitenwand 12, 13 angeordnet.

Der oben beschriebene Grundkörper 11 samt CD 1 ist bei geschlossenem ersten Behälter 10 von einem Hüllkörper 20 umgeben. Der Hüllkörper 20 hat eine Breite B, die größer ist als die Breite b des Grundkörpers 11 bzw. als der Durchmesser X der CD 1. Der Hüllkörper 20 hat vier ebene Wände 21 bis 24 mit jeweils im wesentlichen rechteckiger Grundfläche derselben Länge l, von denen jeweils zwei Wände 21, 22 und 23, 24 eine Hüllfläche 26, 27 ausbilden. Die Länge l jeder Wand 21 bis 24 ist etwas größer als der halbe Durchmesser X der CD 1. Die beiden Wände 21, 22 und 23, 24 sind jeweils an einer gemeinsamen Breitseitenkante 28, 29 gelenkig miteinander verbunden. Ferner sind die beiden unteren Wände 21, 23 im Bodenbreich 31 des Grundkörpers 11 an dessen Seitenflächen 12, 13 angelenkt. An den beiden oberen Wänden 22, 24 ist an den den Breitseitenkanten 28, 29 abgewandten Seiten jeweils ein rechteckiger Ausschnitt 32 ausgebildet, so daß beidseitig der Auschnitte 32 an jeder oberen Wand 22, 24 jeweils zwei Stege 33 verbleiben. Die jeweils einander gegenüberliegenden Stege 33 der oberen Wände 22, 24 sind ebenfalls miteinander gelenkig verbunden, beispielsweise mittels jeweils eines Klebebandstückes 34. Die Größe der beiden gleich großen Ausschnitte 32 ist derart bemessen, daß bei geöffnetem ersten Behälter 10 eine Durchtrittsöffnung 35 für den oberen Abschnitt des Grundkörpers 11, oder zumindest für die CD 1, ausgebildet wird.

Ergänzend wird an dieser Stelle erwähnt, daß für die korrekte Funktion des Behälters 10 bzw. des Hüllkörpers 20 die Durchtrittsöffnung 35 nicht zwangsläufig aus Ausschnitten 32 und Stegen 33 ausgebildet sein muß. Vielmehr kann es auch insbesondere bei Verwendung von flexiblen Materialien für den Hüllkörper 20 genügen, bei geradlinig ausgebildeten Kanten die beiden oberen Wände 22, 24 beidseitig des Grundkörpers 10, also im Bereich der Stege 33, miteinander zu verbinden. Die Durchtrittsöffnung 35 ist dann als Schlitz ausgebildet, der sich beim Durchstoßen der CD 1 erweitert.

Zum Entnehmen der CD 1 aus dem geschlossenen ersten Behälter 10 wird der Hüllkörper 20 bei fixiertem Bodenbereich 31 durch Druck auf dessen Oberseite, zum Beispiel im Bereich der Stege 33, zusammengedrückt, so daß der im geschlossenen Zustand in der Seitenansicht (Figur 1) flache Querschnitt des Hüllkörpers 20 in eine in der Seitenansicht viereckförmige Gestalt verwandelt wird. Sobald die CD 1 beim Zusammendrücken des Hüllkörpers 20 die Durchtrittsöffnung 35 durchdringt ist die CD 1 aus dem Grundkörper 11 entnehmbar. Beim nicht entnommener CD 1 und weiterem Zusammendrücken des Hüllkörpers 20 bildet die CD 1 gleichmaßen eine Führung aus, so daß das Zusammendrücken zwangsläufig symmetrisch in der Haupterstreckungsrichtung der CD 1 erfolgt. Anschließend durchdringt auch der Grundkörper 11 mit seiner Öffnung 16 die Durchtrittsöffnung 35, bevor ein weiteres Zusammendrücken des Hüllkörpers 20 durch die Anschlagelemente 17, 18 verhindert wird.

Für den Fall, daß die Wände 21 bis 24 des Hüllkörpers 20 derart untereinander verbunden sind, daß diese ohne Kraftbeaufschlagung den Hüllkörper 20 in die in der Seitenansicht flache Gestalt zurückführen ist es vorteilhaft, die Anschlagelemente 17, 18 mit einer Rastfunktion vorzusehen. In diesem Fall kann der Hüllkörper 20 mit seiner Durchtrittsöffnung 35 über die Anschlagelemente 17, 18 geschoben werden. Sobald der Hüllkörper 20 entlastet wird läuft die Durchtrittsöffnung 35 gegen die Anschlagelemente 17, 18, die die Durchtrittsöffnung 35 halten, so daß der erste Behälter 10 geöffnet verbleibt. Dies hat den Vorteil, daß ein Wiedereinführen der CD 1 sehr einfach erfolgen kann, während ansonsten Zuerst, wie oben beschrieben, der erste Behälter 10 durch Deformieren des Hüllkörpers 20 zuerst wieder geöffnet werden muß.

Der erste Behälter 10 kann in verschiedener Weise abgewandelt werden. So ist es beispielsweise denkbar, anstelle von gleich großen, bzw. dieselbe Länge l aufweisenden Wänden 21 bis 24 unterschiedlich lange Wände 21 bis 24 vorzusehen, so daß zum Beispiel die beiden unteren Wände 21, 23 jeweils eine geringere Länge l aufweisen als die beiden oberen Wände 22, 24. Ferner kann die Höhe des Grundkörpers 11 auch mehr als etwa die Hälfte des Durchmessers X der CD 1 betragen, wodurch sich ein verbesserter Produktschutz ergibt. Aber auch eine geringere Höhe ist aus Materialersparnisgründen möglich.

Bei dem in der Figur 4 dargestellten zweiten Behälter 10a sind die vier Wände 21 bis 24 durch zwei einzelne, die Hüllflächen 26a, 27a ausbildende Wände 37, 38 ersetzt. Die Wände 37, 38 sind elastisch deformierbar, so daß sich bei geöffnetem Behälter 10a eine in der dargestellten Seitenansicht gebogene bzw. kreisförmige Form der Hüllflächen 26a, 27a einstellt. Ferner ist auch die Rastfunktion der Anschlagelemente 17a, 18a, wie oben bereits beschrieben, dargestellt.

Der in der Figur 5 dargestellte dritte Behälter 10b unterscheidet sich vom ersten Behälter 10 dadurch, daß dessen Wände 21b bis 24b eine geringere Länge l aufweisen. Ferner sind die beiden unteren Wände 21b und 23b an den beiden Seitenflächen 12b, 13b nahe der Öffnung 16b des Grundkörpers 11b befestigt. Somit überdecken die Wände 21b bis 24b lediglich den aus der Öffnung 16b herausragenden Teil der CD 1. Zusätzlich ist die Durchtrittsöffnung 35b des Hüllkörpers 20b mittels einer Abdeckung 40 verschließbar. Die Abdeckung 40 kann zum Beispiel in Form eines Klebestreifens oder einer schwenkbaren Klappe ausgebildet sein. Selbstverständlich kann eine Abdeckung 40 auch bei den zuvor beschriebenen Behältern 10 und 10a vorgesehen sein.

Bei den bisher dargestellten drei Behältern 10, 10a, 10b ist die Ober- und Unterseite der CD 1 des aus dem Grundkörper 11, 11a, 11b herausragenden Teils der CD 1 durch den Hüllkörper 20, 20a, 20b geschützt. Um auch die Umfangsfläche 2 des aus dem Grundkörper 11, 11a herausragenden Teils der CD 1 bei geschlossenem Behälter zu schützen weist der vierte Behälter 10c eine Schutzhülse 41 auf. Die Schutzhülse 41, die bei geschlossenem Behälter 10c den aus dem Grundkörper 11c herausragenden Teil der CD 1 vollständig überdeckt bzw. über diesen Teil der CD 1 übergeschoben ist, ist an den Innenseiten des Hüllkörpers 20c im Bereich der Ausschnitte 32c befestigt. Ferner weist die Schutzhülse 41 eine derartige Höhe y und einen derartigen Innenquerschnitt auf, daß bei geschlossenem Behälter 10c der dem Grundkörper 11c zugewandte Abschnitt der Schutzhülse 41 auf dem entsprechenden Abschnitt des Grundkörpers 11c übergeschoben ist. Dadurch gleitet beim Öffnen des Behälters 10c zum Entnehmen der CD 1 die Schutzhülse 41 nach und nach über den Grundkörper 11c, wobei die CD 1 durch die Durchtrittsöffnung 35c hindurch tritt.

Zusätzlich wird darauf hingewiesen, daß bei Verwendung einer Schutzhülse 41 die Anschlagelemente 17, 18 vorzugsweise an der der Öffnung 16c gegenüberliegenden Seite des Grundkörpers 11c angeordnet sind. Weiterhin ist die Verwendung einer Schutzhülse 41 auch bei dem zweiten Behälter 10a möglich. Voraussetzung für die Verwendung einer derartigen Schutzhülse 41 ist lediglich, daß die Schutzhülse 41 derart über den Grundkörper 11a gleiten kann, daß die CD 1 aus der Durchtrittsöffnung 35 herausragen kann.

Zum Herstellen der Behälter 10, 10a, 10b, 10c können verschiedenste Materialien oder auch Kombinationen von Materialien verwendet werden. Im einfachsten Fall bestehen die beiden Hauptbestandteile, der Grundkörper 11, 11a, 11b, 11c und der Hüllkörper 20, 20a, 20b, 20c aus Pappe- oder Kartonteilen. Dies hat den Vorteil der besten Umweltverträglichkeit, da diese Teile beispielsweise aus Altpapier hergestellt und sehr einfach entsorgt werden können. Auch können auf diese Teile sehr einfach Motive oder Inhaltsinformationen in Form von Klebeetiketten oder zusätzlichen bedruckten Papierschichten aufgebracht werden. Diese zusätzlichen Etiketten oder Papierschichten können auch auf einfache Weise den Zusammenhalt und die Scharnierfunktion insbesondere der Wände 21 bis 24 des Hüllkörpers 20, 20b, 20c erfüllen.

Für größere Stückzahlen dürfte jedoch die Herstellung des Behälters 10, 10a, 10b, 10c aus Kunststoff wirtschaftlicher sein. Außerdem bewirkt ein aus Kunststoff hergestellter Behälter 10, 10a, 10b, 10c aufgrund seiner größeren Festigkeit einen besseren Produktschutz. In diesem Fall können die einzelnen aus Funktionsgründen zueinander beweglichen und miteinander verbundenen Teile durch entsprechend flexible Materialien hergestellt werden, oder es kann beispielweise durch das Anspritzen von Stiften und Stiftaufnahmen analog bei den bekannten CD-Hüllen die Beweglichkeit der einzelnen Teile untereinander sichergestellt werden.

## Patentansprüche

1. Behälter (10; 10a; 10b; 10c) für wenigstens einen Gegenstand (1), mit einem den wenigstens einen Gegenstand (1) teilweise umschließenden, taschenförmig ausgebildeten Basiskörper (11; 11a; 11b; 11c), so daß der wenigstens eine Gegenstand (1) aus dem Basiskörper (11; 11a; 11b; 11c) teilweise herausragt, und mit einem mit dem Basiskörper (11; 11a; 11b; 11c) verbundenen und zu diesem relativ beweglichen Hüllelement (20; 20a; 20b; 20c), das in einer Schließstellung den Gegenstand (1) überdeckt und in einer Entnahmestellung den Gegenstand (1) teilweise freigibt, wobei das Hüllelement (20; 20a; 20b; 20c) zwei gleich lange Seitenflächen (26, 27; 26a, 27a; 26b, 27b; 26c, 27c) aufweist, die am Basiskörper (11; 11a; 11b; 11c) angelenkt und befestigt sind, und bei der der aus dem Basiskörper (11; 11a; 11b; 11c) herausragende Teil des Gegenstandes (1) in der Schließstellung des Hüllelements (20; 20a; 20b; 20c) zwischen den Seitenflächen (26, 27; 26a, 27a; 26b, 27b; 26c, 27c) angeordnet ist, dadurch gekennzeichnet, daß die Seitenflächen (26, 27; 26a, 27a; 26b, 27b; 26c, 27c) an der dem Basiskörper (11; 11a; 11b; 11c) abgewandten Seite untereinander, in der Entnahmestellung eine Durchlaßöffnung (35; 35a; 35b; 35c) für den wenigstens einen Gegenstand (1) bildend, verbunden sind und daß in der Entnahmestellung der aus dem Basiskörper (11; 11a; 11b; 11c) herausragende Teil des wenigstens einen Gegenstandes (1) die Durchlaßöffnung (35; 35a; 35b; 35c) des Hüllelements (20; 20a; 20b; 20c) teilweise durchdringt.

2. Behälter nach Anspruch 1, dadurch gekennzeichnet, daß die beiden Seitenflächen (26, 27; 26b, 27b; 26c, 27c) des Hüllelements (20; 20b; 20c) aus jeweils zwei miteinander flexibel verbundenen, ebenen Flachen (21 bis 24; 21b bis 24b; 21c bis 24c) bestehen, so daß das Hüllelement (20; 20b; 20c) in der Entnahmestellung eine in einer Seitenansicht viereckförmige Gestalt ausbildet.

3. Behälter nach Anspruch 1, dadurch gekennzeichnet, daß die beiden Seitenflächen (26a, 27a) des Hüllelements (20a) jeweils einstückig ausgebildet und elastisch verformbar sind, so daß das Hüllelement (20a) in der Entnahmestellung eine in der Seitenansicht oval- oder kreisförmige Gestalt ausbildet.

4. Behälter nach einem der Ansprüche 1 bis 3, dadurch gekennzeichnet, daß die beiden Seitenflächen (26b, 27b) in Höhe der Öffnung (16b) des Basiskörpers (11b) mit dem Basiskörper (11b) verbunden sind.

5. Behälter nach einem der Ansprüche 1 bis 4, dadurch gekennzeichnet, daß der Basiskörper (11; 11a; 11b; 11c) eine Höhe (h) aufweist, die in etwa der Hälfte der Höhe (X) des wenigstens einen Gegenstandes (1) entspricht.

6. Behälter nach einem der Ansprüche 1 bis 5, dadurch gekennzeichnet, daß zwischen den Seitenflächen (26, 27; 26a, 27a; 26c, 27c) des Hüllelements (20; 20a; 20c) eine den aus dem Basiskörper (11; 11a; 11c) herausragenden Teil des wenigstens einen Gegenstandes (1) umschließende, hülsenförmige Hülle (41) angeordnet ist, die einerseits in Höhe der Durchlaßöffnung (35; 35a; 35c) mit den Seitenflächen (26, 27; 26a, 27a; 26c, 27c) des Hüllelements (20; 20a; 20c) verbunden ist, und die andererseits auf den Basiskörper (11; 11a; 11c) zumindest teilweise verschiebbar ist.

7. Behälter nach einem der Ansprüche 1 bis 6, dadurch gekennzeichnet, daß an dem Basiskörper (11; 11a; 11b; 11c) angeordnete Anschlag- oder Rastelemente (17, 18; 17a, 18a) vorgesehen sind, die in der Entnahmestellung mit der Durchlaßöffnung (35; 35a) zusammenwirken.
